# EUROPÄISCHE PATENTANMELDUNG

(11) **EP 2 040 323 A2**
(43) Veröffentlichungstag der Anmeldung: **25.03.2009**
(21) Anmeldenummer: 08012758.2
(22) Anmeldetag: 15.07.2008
(51) Int. Cl.: H01M 8/00, C01B 3/00, C01F 5/30, C01C 1/02, C01C 1/16

(54) **Verfahren zum Bereitstellen von stickstoffbasierten Wasserstoff-Energiespeichern**

(30) Priorität: 30.01.2008 EP 08051151; 07.08.2007 EP 07113903
(71) Anmelder: Dr. Krass, Florian, 6353 Weggis (CH)
(72) Erfinder: Dr. Krass, Florian, 6353 Weggis (CH)

(57) **Zusammenfassung**

Verfahren zum Bereitstellen eines stickstoffbasierten Wasserstoff-Energiespeichers unter Verwendung eines Gemisches, das Kohlenstoffanteile und Siliziumverbindungen, umfasst.

## Beschreibung

Diese Anmeldung beansprucht die Prioritäten der
- internationalen Patentanmeldung PCT/EP2008/051151, die am 30.01.2008 eingereicht wurde, und
- europäischen Patentanmeldung EP 07 113 903.4, die am 07.08.2007 eingereicht wurde.

Die vorliegende Anmeldung betrifft gemäss dem unabhängigen Anspruch 1 ein Verfahren zum Bereitstellen eines stickstoffbasierten Wasserstoff-Energiespeichers.

Angesichts der stetig wachsenden Erdbevölkerung wurden die Forschungsbemühungen verstärkt, um sowohl auf einen steigenden Bedarf an Energie reagieren zu können, als auch um umweltverträglichere Energieträger zu finden und zu kommerzialisieren. Insbesondere Wasserstoff (H), aber auch Ammoniak (NH₃) werden dabei als wichtige potentielle Energielieferanten diskutiert. Sie sollen als Alternativen beispielsweise zu den bisher verwendeten Benzin- und Diesel-Kraftstoffen in Verbrennungsmotoren eingesetzt werden. Die Verbrennung dieser herkömmlichen Kraftstoffe liefert umweltschädliche Abgase, wie Kohlenstoffoxide oder Stickoxide. Die Verbrennung von Ammoniak oder Wasserstoff dagegen läuft relativ sauber ab (das Abgas der Wasserstoff-Verbrennung ist Wasser). Entsprechend wird auch eine Verwendung von Wasserstoff und Ammonlak in Brennstoffzellen für die Erzeugung elektrischer Energie diskutiert. Eine der grossen Herausforderungen ist, diese - alternativen - Energieträger in einer praktikablen und schadstoffarmen Art und Weise herzustellen, zu speichern und bereitzustellen. Dies insbesondere, da bisher die Lagerung von Wasserstoff beispielsweise unter hohem Druck und/oder bei sehr niedrigen Temperaturen erfolgt. Dies ist jedoch mit einem erhöhten Sicherheitsrisiko verbunden, und solche Lagerungsarten bedürfen noch weiterer Entwicklung.

Ammoniak selbst dient bereits als ein Träger für Wasserstoff. Eine Vorrichtung zum speichern und Bereitstellen von Ammoniak und ein Verfahren zum Produzieren von Strom mit dieser Vorrichtung ist beispielsweise aus der Patentanmeldung US 2007/0207351 A1 bekannt. Diese Schrift offenbart eine Vorrichtung und ihre Verwendung zum Speichern von Ammoniak, Dabei wird das NH₃ in einem Salz der Formel MₐX_{z} gespeichert, so dass der Komplex Mₐ(NH₃)ₙX_{z} entsteht. Beispielhafte Salze sind M_{g}Cl₂, ZnCl₂, CaBr₂, FeCl₃ oder auch NiSO₄, Diese Komplexe können dann in Kraftstoffzellen/Brennstoffzellen gelagert und bei Bedarf erhitzt werden, um NH₃ frei zu setzen, um dann daraus elektrische Energie zu gewinnen.

Eine solche Speicherart benötigt also als Ausgangsstoff Ammoniak. Eine konventionelle Produktion von Ammoniak aus z.B. Kohle geht einher mit einer unerwünschten Freisetzung von Kohlenstoffoxiden. Weiterhin ist aus dem Stand der Technik das Haber-Bosch-Verfahren bekannt, nach dem Ammoniak durch direkte Vereinigung von Stickstoff und Wasserstoff nach der Gleichung (1) hergestellt wird. Diese Reaktion benötigt jedoch eine hohe Aktivierungsenergie.

N₂ + 3 H₂ ⇄ 2 NH₃ + 92 kJ (1)

Es stellt sich nun die Aufgabe ein alternatives Verfahren bereitzustellen, mit dem grosse Mengen eines einfach handhabbaren Energieträgers umweltschonend hergestellt werden können.

Gemäss der Erfindung wird ein Energieträger in Mengen bereitgestellt, die den Bedarf für die Verwendung in verschiedensten Anschlussreaktionen decken kann. Die Herstellung soll unter eriergieneutralen Bedingungen erfolgen, die einzelnen Reaktionsschritte sollen also nicht mehr Energie verbrauchen, als bereitgestellt wird. Idealerweise kann sogar mehr Energie bereitgestellt als verbraucht werden.

In vorteilhaften Ausführungsformen werden Zwischenprodukte wie CO₂ in eine gebundene und damit umweltverträgliche Form überführt.
Weitere Einzelheiten und Vorteile der Erfindung werden im Folgenden näher beschrieben.

In der Zelchnüng ist beispielhaft ein Reaktionssystem dargestellt, das zur Durchführung eines erfindungsgemässen Verfahrens geeignet ist:
- Fig. 1:: Reaktionssystem in Form eines Kraftwerksbetriebes.

### Detaillierte Beschreibung:

Das erfindungsgemässe Verfahren beruht auf einer neuartigen Kombination von Reaktionsschritten und ergibt eine Bereitstellung eines stickstoffbasierten Wasserstoff-Energiespeichers oder eines Zwischenprodukts, das zur Bereitstellung eines stickstoffbasierten Wasserstoff-Energiespeichers geeignet ist.
Solch ein Wasserstoff-Energiespeicher ist bevorzugterweise Ammonlak (NH₃). Der Vorteil von Ammoniak liegt in seinen möglichen Verwendungsformen. Er eignet sich beispielsweise als Quelle für Wasserstoff (H), das direkt als Kraftstoff in entsprechenden Verbrennungsmotoren "verbrannt" oder in Brennstoffzellen zu Strom umgesetzt werden kann. Andererseits kann Ammoniak selbst in solchen Motoren oder Zellen verwendet werden. Als erfindungsgemässer, stlckstoffbasierter Wasserstoff-Energiespelcher kann aber auch jede andere, geeignete chemische oder biologische Verbindung hergestellt werden, wie zum Beispiel NH₄Cl oder Harnstoff.

Vorzugsweise wird in einem ersten Schritt als Ausgangsstoff ein Gemisch verwendet, das Kohlenstoffanteile und Siliziumverbindungen umfasst. Besonders vorteilhaft ist das Verwenden von Braunkohle mit Sand und/oder Silikaten (z.B. in Form von Kieselgur bzw. Kieselalgengehäusen), wobei dieses Gemisch nicht getrennt werden muss, bevor es in das erfindungsgemässe Verfahren eingeschleust wird, da es in einem mehrstufigen, erfindungsgemäßen Verbrennungsprozess umgesetzt wird. Besonders geeignet ist die sogenannte Diatomeenkohle (bei Lübteen in Mecklenburg Vorpommern).

Diatomeenkohle umfasst einen Braunkohleanteil und Kieselgur. Kieselgur beeinhaltet im Wesentlichen Siliziumoxid (SiO₂). Die Diatomeenkohle hat einen sehr geringen Heizwert (ca. 50 Prozent zur Vergleichskohle) sowie einen extrem hohen Ascheanteil. Der Ascheanteil umfasst zum Großteil das Kieselgur. Daher wurde es bisher als technisch nacht sinnvoll angesehen, diese Kohle in einem Kraftwerksprozess zu verbrennen, um Wärme oder Strom zu erzeugen.
Es kann aber auch ein künstliches Gemisch als Ausgangsstoff zum Einsatz kommen, das Holzbestandteile und ein siliziumdioxidhaltiges Material (z.B. Sand oder Schiefer) umfasst. Besonders bewährt haben sich stark verdichtete, leicht zu transportierende Formen dieses künstlichen Gemischs (z.B. in Form von Pellets oder Briketts).

Zumindest die verbrennungsschritte mit Sauerstoff (O₂) und Stickstoff (N₂) des erfindungsgemässen Verfahrens werden in einem Reaktionssystem durchgeführt. Ein solches Reaktionssystem kann zum Beispiel ein Kraftwerksbetrieb sein, wie er zur Veranschaulichung in Figur 1 dargestellt ist, Das Gemisch wird hier intelligent und selektiv gesteuert mit geeigneten Gasen zur Verbrennung und/oder zur Reaktion gebracht. Vorzugsweise wird erst mit Sauerstoff und dann mit Stickstoff "verbrannt". Die Kontrolle dieser Reaktion erfolgt mittels einer kontrollierten Prozess-Steuerung. Ein entsprechendes Kraftwerk Ist Gegenstand der Internationalen Patentanmeldung PCT/EP2008/051151 des Erfinders Dr. F. Krass, die am 30.01.2008 beim Europäischen Patentamt eingereicht wurde und deren Priorität hier beansprucht wird. Als Reaktionssystem kann jedoch auch jedes andere für die jeweiligen Einzelreaktionen des erfindungsgemässen Verfahrens geeignete System verwendet werden, beispielsweise auch eine entsprechende Laborgeräte-Anordnung für die Durchführung in kleineren Massstäben.

Die erfindungsgemässe Umsetzung des gesamten Gemisches erfolgt im Wesentlichen nach den Reaktionsgleichungen (2) und (3) und wird im Folgenden anhand von Figur 1 näher erläutert.

3SiO₂ + O₂ + 4C → 4CO₂ + 3 Si (2)

3Si + 2N₂ → Si₃N₄ Δ H = -744kJ/Mol; stark exotherm (3)

Es handelt sich in Figur 1 um ein Reaktionssystem 100, das speziell für die ersten Schritte des vorliegenden Verfahrens optimiert wurde und einen besonders gluten Fluss des Gemischs 12 und eine gute Zufuhr von Reaktionsgasen und Abfuhr von Abgasen erlaubt. Der Reaktor 40 hat einen rotatlonssymmetrischen Aufbau. Die Symmetrieachse A verläuft mittig durch den Reaktor 40. Der Reaktor 40 zeichnet sich dadurch aus, dass er eine erste äußere konische oder schräge Fläche 42 hat, die schräg nach innen geneigt ist. Diese Fläche 42 geht über in eine zweite schräge Fläche 43, die steiler verläuft und auch nach innen geneigt ist. Am äußeren Umfang des Reaktors 40 sind Türen oder Klappen 44 vorgesehen, die ein Befüllen des Reaktors 40 mit dem Gemisch 12 von außen ermöglichen, Vorzugsweise werden Geleise oder Strassen außen um den Reaktor 40 herum angelegt, um mit Waggons oder LKWs das Gemisch 12 anzuliefern. Wenn die Türen oder Klappen 44 geöffnet werden, kann das Gemisch 12 eingebracht werden. Die Schwerkraft lässt neu eingebrachtes Gemisch 12 langsam die schräge Fläche 42 hinunter rutschen. Unterhalb dieser schrägen Fläche können Heizmittel 45 angeordnet sein, um das Gemisch 12 zu trocknen und/oder vorzuheizen. Mehr zur Mitte des Reaktors 40 hin ist ein 1. Gasverteilkopf 46 vorgesehen, der von unten her über ein Rohr 14 mit stark sauerstoffhaltigem Gas O versorgt wird. Vorzugsweise wird sauerstoffhaltiges Gas mit einer Sauerstoffkonzentration von über 50% bereitgestellt. Besonders vorteilhaft ist ein sauerstoffhaltiges Gas mit einer Sauerstoffkonzentration von über 95%. In der ersten Brennzone 10 wird durch das Einblasen des sauerstoffhaltigen Gases 0 das Gemisch 12 verwirbelt, wie durch die Wolke 41 angedeutet. Das verwirbelte Gemisch 41 wird mit dem Sauerstoffgas O verbrannt und der Kohlenstoffanteil steigt in Form von Rauchgas, das fast nur CO₂ enthält, nach oben auf und wird dort durch den Abzug 11 eingefangen. Durch die Verwirbelung entsteht einer drastische Oberflächenvergrösserung des Gemischs 12 und der Verbrennungsvorgang ist effizienter und vollständiger. Durch das Verbrennen des Kohlenstoffanteils des Gemisches 12 wird eine enorme Wärmemenge frei, die zum Teil für die nachfolgenden Prozessschritte verwendet werden kann, zum Beispiel mittels eines Wärmetauschers 13 zum Bereitstellen von Dampf. Mit dem Dampf kann dann z.B. eine Turbine angetrieben werden, um Strom zu erzeugen. Sollten die Temperaturen nicht ausreichen, die im Bereich 10 anfallen, dann kann durch einen 2. Gasverteilkopf 47, der hier als konischer Kopf ausgeführt ist, von der Mitte her Kohlenwasserstoffgas (z.B. Propan, Butan oder Methan), hier als Gas1 bezeichnet, eingeblasen werden. Durch eine geeignete Steuerung der Abläufe mittels einer Steuerung S, kann die Temperatur so eingestellt werden, dass die Siliziumverbindungen des verbleibenden Teils 22 des Gemisches aufgespalten werden (z. B. in elementares Silizium). Das Kohlenwasserstoffgas Gas1 kann durch ein Rohr 24 zugeführt werden. Durch die Zufuhr von Kohlenwasserstoffgas, kann der Kohlenstoffanteil des Gemischs 12 ergänzt werden. So kann mit der Steuerung S z.B. dann Kohlenwasserstoffgas in den Reaktor 40 eingebracht werden, wenn nicht genügend Kohlenstoff aus dem Gemisch 12 zu Verfügung steht, um der Siliziumverbindung (SiO₂) den Sauerstoff zu rauben.

Für die Synthese von Siliziumnitrid (SI₃N₄) wird Stickstoffgas N eingeblasen, wobei ein Teil des Stickstoffs dann mit elementarem Silizium zu Si₃N₄ reagiert und sich im Bodenbereich der Brennzone 20 ablagert. Das Stickstoffgas N kann entweder durch den 2. Gasverteilkopf 47 eingeblasen werden, oder es kann, wie in Fig. 1 angedeutet, durch einen 3. Gasverteilkopf 48 eingeblasen werden. Das Stickstoffgas N kann durch ein Rohr(e) 25 zugeführt werden. Silizium verbrennt mit Stickstoff zu Siliziumnitrid bei etwa 1350°C. Die Reaktion ist exotherm, wie in der Gleichung (3) angedeutet.

Im untersten Bereich des Reaktors 40 können' wiederum Türen oder Klappen 49 angeordnet sein, um das Siliziumnitrid (Si₃N₄) durch ein Öffnen dieser Türen oder Klappen 49 zu entnehmen. Nach dem Öffnen der Türen oder Klappen 49 kann das (Rekations-)Produkt z.B. auf einen Konus 52 mit schrägen Außenflächen auftreffen, um nach außen abzurutschen.

Oberhalb der zweiten Brennzone 20 ist ein Abzug 21 vorgesehen, der Gase aufnimmt, die nicht reagiert haben.

Unabhängig von dem konkret verwendeten Reaktionssystem zeichnet sich die Erfindung dadurch aus, dass mehrere Reaktionen Hand in Hand ablaufen. Die einzelnen Reaktionen/Prozesse werden gemäß Erfindung durch Kontrolle der Mengen des Gemischs 12 und durch Steuerung der Gasdrücke und Gasflüsse gesteuert. Vorzugsweise sind innerhalb und/oder an der Anlage 100 zahlreiche Druck-, Temperatur- und Gassensoren vorgesehen. Diese Sensoren liefern steuergrössen für eine Steuerung S der Anlage. Die Steuerung S wird hier auch als kontrollierte Prozess-Steuerung bezeichnet.

Mit der Steuerung S der in der Anlage 100 ablaufenden komplexen Prozesse, die stoffspezifisch optimiert werden müssen, werden die Gasströme, respektive Gasmengen, das Temperatur-Zeit Regime und die Menge des umzusetzenden Gemischs 12, respektive dessen Zusammensetzung berücksichtigt.

In Fig. 1 ist diese Prozess-Steuerung S schematisch angedeutet. Eine analoge (im Sinne von gleichwirkend) Steuerung S kann auch bei anderen erfindungsgemässen Anlagen zum Einsatz kommen. Um das Funktionsprinzip der Erfindung zu verdeutlichen, sind die Gasquellen 50 In Form von Gasflaschen schematisch dargstellt. Es liegt auf der Hand, dass bei einer Grossanlage 100 andere Gasquellen 50 zum Einsatz kommen. Die Gasdrücke und Gasflüsse der einzelnen Gase werden je nach Bedarf mittels gesteuerten Gaszufuhren 51 gesteuert.

Mit einer geeigneten Steuerungssoftware (die z.B. Teil der Steuerung S sein kann), können alle Prozesse so geführt werden, dass eine möglichst vollständige Umsetzung in die gewünschte Richtung statt findet.

Zusätzlich kann der zweiten Brennzone 20 temporär sauerstoffhaltiges Gas zugeführt werden. Anstatt des sauerstoffhaltigen Gases, oder zusätzlich zu diesem Gas kann dem Verfahren Dampf oder hyperkritisches H₂O bei über 407° C zugeführt werden. Es kann aber auch Kohlendioxid (z.B. aus dem Abgas) zugeführt werden, um z.B. einen Kohlenstoffmangel im Gemisch 12 oder 22 auszugleichen. Diese zusätzliche Gas (Sauerstoff oder Dampf oder Kohlendioxid) ist in Fig. 1 mit Gas2 bezeichnet. Ebenso ist eine entsprechende Gasquelle schematisch gezeigt. Als zusätzliches Gas kann aber auch Kohlenstoffdioxid aus dem Abzug 11 erneut dem Prozess zugeführt werden.

Zusätzlich oder alternativ kann dem Reaktor 40 temporär ammohiakhaftiges Gas zugeführt werden. Vorzugsweise wird ein Gasgemisch aus Ammoniak und Stickstoff zugeführt. Dieser Ansatz hat den Vorteil, dass die Umsetzung zu Siliziumnitrid (SI₃N₄), d.h. die Nitridierung, schneller und/oder effizienter abläuft.

Dem beschriebenen Prozess liegt der bekannte Ansatz der carbothermischen Nitridierung (carbothermal nitridation) von Siliziumverbindungen, insbesondere von SIO₂, zu Grunde. Details hierzu sind z.B. aus der US-Patentschrift US 5,075,091, L. Schönfelder et al., zu entnehmen.

Bei der Stickstoffikopplung an Silizium (die z.B. in der zweiten Brennzone 20 oder in einer dritten Brennzone statt findet) wird vorzugsweise die reine Stickstoffatmosphäre (oder ein Gasgemisch aus Ammoniak und Stickstoff), mit Stickstoff aus der Umgebungsluft, durch (aus der Propannitrierung bekannt) Verbrennung des Sauerstoffanteils der Luft mit Propangas erreicht. Das Stickstoffgas und das Sauerstoffgas kann aber auch mittels des Linde-Verfahrens bereit gestellt werden.

Wie oben erläutert, finden in einem in Figur 1 dargestellten Reaktionssystem die Verbrennungsreaktionen mit sauerstoffhaltigem Gas O und mit Stickstoffgas N in voneinander verschiedenen Brennzonen statt (10 und 20). Diese Brennzonen können also örtlich im Reaktionssystem getrennt sein. Denkbar ist aber ebenfalls sogar eine räumliche Trennung der Brennzonen ebenso wie keine örtliche/räumliche Trennung.

Siliziumnitrid (SI₃N₄) ist ein verschleißfester Werkstoff, der beispielsweise bei hochbeanspruchten Teilen im Maschinenbau, Turbinenbau, chemischen Apparaturen, Motorenbau eingesetzt werden kann oder wird.

Siliziumnitrid (Si₃N₄) kann aber auch als Baustoff für den Strassenbau eingesetzt werden. In diesem Fall kann das Reaktionssystem als ein fahrbares oder transportierbares System ausgefegt, das mit siliziumhaltigen Rohstoffen (z.B. Ölsand und/oder Diatomeenkohle) beschickt wird und das sich die Gas (z.B. durch Luftzerlegung) aus der Umgebungsluft holt. Siliziumnitrid (Si₃N₄) kann als Teerersatz oder als Teerergänzungsstoff eingesetzt werden.

Um die Umsetzung der Siliziumverbindungen des Gemischs (Diatomeekohle) zu Silizium und die Umsetzung ("Verbrennung") zu Siliziumnitrid zu unterstützen, kann von Zeit zu Zeit eine Thermitreaktion angeschoben werden, indem z.B. Alurninium und Eisen(III)-oxid eingebracht wird.

Da die Umsetzung zu Siliziumnitrid stark exotherm ist, kann ein Teil der Wärmeenergie, die in diesem exothermen Prozessen frei gesetzt wird, eingesetzt werden, um das Reduktionsmittel aufzubereiten, bzw. bereit zustellen.

In einer weiteren Ausführungsform der Erfindung kommt ein künstliches Gemisch als Rohstoff zum Einsatz, das Holzbestandteile und ein siliziumdioxidhaltiges Material (z.B. Sand oder (öl-)Schiefer) umfasst. Besonders bewährt haben sich stark verdichtete, leicht zu transportierende Formen dieses künstlichen Gemischs (z.B. in Form von Pellets oder Briketts). Die Pellets oder Brikets können aus trockenem, naturbelassenem Restholz (Säge- und Hobelspäne) zusammen mit z.B. Sand in die gewünschte Form gepresst werden. Sie werden unter hohem Druck gepresst und haben einen extrem niedrigen Wassergehalt und eine hohe Eigendichte. Daher ergibt sich nur ein kleines Lager- und Transportvolumen. Vorzugsweise wird das das holzeigene Lignin als Bindemittel für die Pellets oder Briketts verwendet, um sowohl die Holz-, respektive die Kohlenstoffanteile, als auch die Siliziumverbindung zu verbinden. Auch möglich ist die Verwendung von Holzanteilen, die mit einer Siliziumverbindung ummantelt oder umgeben sind.

In einer besonders bevorzugten Ausführungsform der Erfindung wird dieses Gemisch vor oder während des Verbrennens aufgeschäumt oder durch Hitze und enthaltende Gasbestandteile aufgebläht (popcorning), um so die Oberfläche deutlich zu vergrößern und die chemischen Reaktionen zu fördern.

In einem weiteren erfindungsgemässen Schritt wird ein stickstoffbasierter Wasserstoff-Energiespeicher durch Umsetzen des Siliziumnitrids synthetisiert. Das Siliziumnitrid dient hier als Zwischenprodukt für die Bereitstellung des stickstoffbasierten Wasserstoff-Energiespeichers. Ein bevorzugterweise synthetisierter stlckstoffbasierten Wasserstoff-Energiespeicher ist Ammoniak. Ammoniak kann beispielsweise mittels einer Hydrolyse oder auch in Gegenwart einer Lauge (z.B. KOH) aus dem Siliziumnitrid erzeugt werden. Die Lauge müsste dann von aussen zugeführt werden. Notwendig ist jedoch In jedem Fall eine Wasserstoff-Quelle, die die Verbindung von Wasserstoff mit dem Stickstoff ermöglicht. Als Nebenprodukt dieser Reaktion entsteht wiederum Si, das für andere Verfahren zur Verfügung steht, beispielsweise für die Herstellung von Siliziumcarbid oder die Rückoxidation zu SiO₂. Eine stark vereinfachte Reaktionsgleichung (4) der Synthese des stickstoffbasierten Wasserstoff-Energiespeichers ist im Folgenden, beispielhaft für Ammoniak (NH₃), dargestellt:

Si₃N₄ + 12 H → 4NH₃ + 3 Si (4)

Die Umwandlung des Siliziumnitrides in den stickstoffbaslerten Wasserstoff-Energieträger kann in dem gleichen Reaktionssystem erfolgen. Dabei könnte jedoch zumindest der Reaktionsbereich örtlich unterschiedlich sein zu denen, an denen vorhergehend die Verbrennungsreaktionen stattgefunden haben. Es ist aber ebenfalls möglich, diese Umwandlung in einem separaten Reaktionssystem durchzuführen. Hierzu wäre eln Transport des Siliziumnitrides von dem ersten Reaktionssystem in ein anderes, zweites Reaktionssystem erforderlich.

In einer weiteren, bevorzugten Ausführungsform wird Ammoniak, das aus dem Siliziumnitrid synthetisiert wurde, in ein Ammoniumsalz umgewandelt. Dies wird erreicht, indem das Ammoniak in ein modifiziertes Solvay-Verfahren eingeschleust wird. Eln entsprechendes Verfahren ist Gegenstand der Patentanmeldung EP 07 113 903.4 des Erfinders Dr. F. Krass, die am 07.08.2007 eingereicht wurde.

In einer bevorzugten Ausführungsform wird Ammoniak zu Ammoniumchlorid umgewandet. Dies ist ein Feststoff, der einfach zu lagern und zu transportieren ist. Auf diese Weise kann der Energieträger - Ammoniak als stickstoffbasierter Energiespeicher - unabhängig vom Verwendungsort hergestellt und je nach Bedarf an den Ort des Verbrauchs geschafft werden. Eine vereinfachte Netto-Reaktionsgleichung (5) einer beispielhaften Umwandlung von Ammoniak zu Ammoniumchlorid entsprechend des modifizierten Solvay-Verfahrens Ist im Folgenden dargestellt:

4CO₂ + 4 NaCl + 4 NH₃ + 4 H₂O → 4 NaHCO₃ + 4NH₄Cl (5)

Für die Durchführung dieses Verfahrens wird zunächst eine konzentrierte Salzsole mit erhöhter Salzkonzentration bereitgestellt. Diese konzentrierte Salzsole wird vorzugsweise aus Meerwasser erzeugt und ist damit eine konzentrierte, wässrige Natriumchloridlösung, die hier vereinfachend als konzentrierte Salzsole bezeichnet wird.

Vorzugsweise wird diese konzentrierte Salzsole (vorzugsweise eine gesättigte oder nahezu gesättigte Sole) durch ein Verdampfungsverfahren (thermisches Destillationsverfahren) erzeugt. Besonders bewährt hat sich die mehrstufige Entspannungsverdampfung (MSF - multistage flash evaporation), das mit einem Filterverfahren kombiniert ist, aber auch andere entsprechende Verfahren sind denkbar. Gemäss Erfindung kann die Energiemenge, die benötig wird, um das mehrstufige Entspannungsverfahren zu betreiben, mindestens teilweise aus einem Kraftwerksprozess bereit gestellt werden.

Die konzentrierte Salzsole hat vorzugsweise eine Salinität, die grösser ist als 200 g/l, und vorzugsweise grösser ist als 300 g/l. Es ist besonders vorteilhaft den Gesamtsalzgehalt (Salinität) der konzentrierten Salzsole durch eine Leitfähigkeitsmessung zu überwachen. Der Gesamtsalzgehalt kann auch durch Messung des pH-Werts überwacht und der gesamte Prozess dadurch gesteuert werden.

Die im erfindungsgemässen Verfahren zum Einsatz kommende konzentrierte Salzsole kann auch aus "festem" Salz und Wasser erzeugt werden. Zu diesem Zweck können Salzvorkommen abgebaut und angeliefert werden. Das Salz kann dann mit Wasser zur konzentrierten Salzsole aufbereitet werden. Das Salz kann man z.B. aus Salzbergwerken nehmen, die kein sauberes und essbares Salz mehr liefern, oder es kann in der Nähe vom Meer aus dem Meerwasser stammen. In Deutschland gibt es immer noch grosse Salzvorkommen, die eingesetzt werden könnten. Das Salz kann man z.B. auch aus unterirdischen Lagerstätten (z.B. Lagerstätten in Brasilien, die mittels Tiefbohrung erschliessbar sind) gewinnen.

Neben der konzentrierten Salzsole wird zur Durchführung des modifizierten Solvay-Verfahrens in dieser bevorzugten Ausführungsform des Verfahrens neben der Salzsole auch Kohlenstoffdioxid (CO₂) bereitgestellt. Hierfür wird bevorzugterweise ein Rauchgas verwendet, das kohlenstoffdioxidhaltig ist. Rauchgase sind die Abgase von Kraftwerksanlagen, also Anlagen z.B. zur Strom-und Wärmeerzeugung. Da Kohlenstoffdioxid zur Zeit als ein Hauptverursacher der globalen Klimaerwärmung diskutiert wird, wird vorzugsweise das Kohlenstoffdioxid bereitgestellt, das bei der Herstellung des stickstoffbasierten Wasserstoff-Energieträgers entstanden ist. Vergleicht man die Stöchiometrie der Reaktionsgleichungen (1) und (5), stellt man fest, dass es tatsächlich möglich ist, die Menge an CO₂, die laut Gleichung (1) produziert wurde, wieder für die Umwandlung in Ammoniumchlorid bereitzustellen und zu verbrauchen. Damit ergibt sich für diese bevorzugte Ausführungsform des erfindungsgemässen Verfahrens eine ausgeglichene CO₂-Bitanz.

Zur Durchführung des modifizierten Solvay-Verfahrens wird der stickstoffbasierte Wasserstoff-Energiespeicher in die konzentrierte Salzsole eingeleitet. Bevorzugterweise wird Ammoniak als stickstoffbasierte Wasserstoff-Energiespeicher verwendet. Dabei wird eine ammoniakhaltige Sole erzeugt (auch Ammoniak-Sole genannt).

Vorzugsweise wird dieser Vorgang In einer sogenannten Sättigungsapparatur 20 durchgeführt. Dieser Schritt ist exotherm, d.h. es wird Energie frei. Diese freiwerdende Energie kann beispielsweise mittels der Sättigungsapparatur verwendet werden, um die konzentrierte Salzsole aus dem Meerwasser zu gewinnen. Damit würde der Energiebedarf für das Bereitstellen der Sole reduziert.

Nun wird CO₂ in die ammoniakhaltige Sole eingebracht. Es kann aber auch in die konzentrierte Salzsohle eingeleitet werden, beispielsweise auch zusammen mit Ammoniak. Der Zeitpunkt der CO₂ -Zugabe kann aber auch so gewählt sein, dass noch nicht die gesamte konzentrierte Salzsole in eine ammoniakhaltige Sole umgewandelt wurde und beide Solen zeitgleich vorliegen.

Auch dieser Prozess ist exotherm und unter Wärmeentwicklung fällt das Natriumhydrogencarbonat (NaHCO₃) aus. Da die Löslichkeit von CO₂ in der ammoniakhaltigen Sole mit steigender Temperatur abnimmt, sollten Kühleinrichtungen eingesetzt werden, um die bei der exothermen Reaktion entstehende Wärme abzuführen.

Das Natriumhydrogencarbonat (NaHCO₃) kann gelagert werden, um das CO₂ dauerhaft zu binden. Natriumhydrogencarbonat kann aber auch in nachgeschalteten chemischen (z.B. industriellen) Prozessen eingesetzt werden, bei denen möglichst keln CO₂ entsteht.

Das Natriumhydrogencarbonat (NaHCO₃) kann außerdem durch langsames Erwärmen getrocknet und damit als Pulver (calziniertes Soda = wasserfreies Natriumcarbonat: Na₂CO₃) bereitgestellt werden. Vorzugsweise wird das beim Erwärmen entstehende Süßwasser aufgefangen. Das Erwärmen geschieht vorzugsweise bei einer Temperatur T<=50°C, um die Freisetzung von CO₂ ganz zu verhindern, oder um die freigesetzte CO₂ Menge zu reduzieren.

Das Natriumcarbonat kann gelagert werden, um das CO₂ dauerhaft zu binden. Natriumcarbonat kann aber auch in chemischen Prozessen eingesetzt werden, bei denen möglichst kein CO₂ entsteht.

Neben Natriumhydrogencarbonat (NaHCO₃) entsteht weiterhin ein Ammonlumchlorid (NH₄Cl). Dies ist ein weißer Feststoff, der bei normaler Umgebungstemperatur sowohl gut lagerbar als auch einfach zu transportieren ist. Bei höheren Temperaturen zerfällt es in Ammoniak (NH₃) und Chiorwasserstoff (HCl). Damit eignet sich Ammoniumchlorid gut als Zwischenprodukt, um als Ausgangsprodukt für weitere, NH₄-abhängige Prozesse zur Verfügung zu stehen. Lagerung und Transport sind einfach und relativ ungefährlich. Es lässt sich weiterhin relativ einfach in NH₃ zurückwandeln. Da NH₃ als Gas ungleich komplizierter in der Lagerung und/oder Transport ist, muss jedoch nicht auf NH₃ als Quelle für H₂ oder direkt als Kraftstoff verzichtet werden, sondern wird in fester Form als Ammoniumchlorid gelagert/transporkiert, und nur entsprechend dem Bedarf direkt zur Verfügung gestellt.

Aus Ammoniumchlorid kann aber auch über den folgenden Weg (6) Ammoniak und NaCl zurückgewonnen werden. Denkbar wäre dieser Weg, wenn diese Substanzen wieder in das modifizierte Solvay-Verfahren eingeschleust werden sollen, beispielsweise wenn Kohlenstoffdioxid In eine gebundene Form umgewandelt werden soll.

NH₄Cl + NaOH → NH₃ + NaCl + H₂O (6)

In einer weiteren bevorzugten Ausführungsform wird das Ammoniumchlorid

(NH₄Cl) als Ausgangsstoff für die Speicherung von Ammoniak (NH₃) in einem Speichersalz verwendet. Es hat sich herausgestellt, dass bestimmte Salze wie Magnesiumchlorid (MgCl₂) geeignet sind, um Ammoniak effizient aufzunehmen. Unter Verwendung von Ammoniumchlorid aus dem erfindungsgemäss angewandten, modifizierten Solvay-Verfahren und einem Metalloxid, wie z.B. Magnesiumoxid (MgO, oder auch Perikles genannt), entsteht zunächst Magnesiumchlorid (MgCl₂) und wieder Ammoniak (NH₃). Eine solche erfindungsgemässe Reaktion (7), bei der Ammoniumchlorid (NH₄Cl) mit dem Metalloxid zur Reaktion gebracht werden, ist vereinfacht und beispielhaft im Folgenden dargestellt:

2NH₄Cl + MgO → M_{g}Cl₂ + 2NH₃ + H₂O (7)

Das bereitgestellte Metalloxid kann, wie bereits oben erwähnt, ein Magnesiumoxid sein. Es sind jedoch auch andere Metalloxide verwendbar. Das Metall ist dabei ausgewählt aus einer Gruppe von Alkalimetallen, Erdalkalimetallen und Übergangsmetallen. Beispiele für Alkalimetalle sind Lithium (Li), Natrium (Na) und Kalium (K), Beispiele für Erdalkalimetalle sind Magnesium (Mg) und Calcium (Ca), und Beispiele für Übergangsmetalle sind Mangan (Mn), Eisen (Fe), Nickel (Ni) und Kupfer (Cu). Es können aber auch Kombinationen wie z.B. K₂Fe verwendet werden.

Das entstandene Metalichlorid und dass ebenfalls entstandene Ammoniak (NH₃) reagieren weiter zu Metall(NH₃)Chlorid. Dabei nimmt das Metallchlorid das Ammonlak zur Speicherung reversibel auf. In der bevorzugten Ausführungsform, in der das zuvor eingesetzte Metalloxid ein Magnesiumoxid ist, entsteht damit Mg(NH₃)Cl₂. In dieser Form kann das Metallchlorid weitere NH₃ reversibel, und stellt somit einen sehr effizienten Speicher für Ammoniak dar. Eine solche erfindungsgemässe Reaktionen (8) lst vereinfacht und beispielhaft nachfolgend dargestellt:

MgCl₂ + NH₃ → Mg(NH₃)Cl₂ (8)

Mg(NH₃)Cl₂ + NH₃ → Mg(NH₃)₂Cl₂ (9)

Mg(NH₃)₂Cl₂ + 4(NH₃) → Mg(NH₃)₆Cl₂ (10)

Das von dem Metallchlorid reversibel aufgenommene Ammoniak kann dann in einer weiteren bevorzugten Ausführungsform des erfindungsgemässen Verfahrens zur Bereitstellung von Wasserstoff verwendet werden. Es kann z.B. in Brennstoffzellen aus dem Salzspeicher wieder freigelassen werden. Vorteil ist hier, dass - im Gegensatz zu Ammoniumchlorid - bei der Ammoniak-Freisetzung keine Säure frei wird, sondern wieder ein Salz.

Ammoniak (NH₃) lässt sich auch erzeugen, indem man Ammoniumchlorid (NH₄Cl) mit Calciumoxid (CaO) mischt und erwärmt.

Das Ammoniak kann teilweise oder auch ganz aus dem landwirtschaftlichen Bereich gewonnen werden. Dort fällt Ammoniak hauptsächlich in der Viehzucht in grossen Mengen an. Durch geeignete Anlagen im Bereich von Viehställen, kann z.B. Ammoniak eingefangen werden. In diesem Zusammenhang eignen sich auch die erwähnten Salze zum Speichern und transportieren des Ammoniaks.

## Patentansprüche

1. Verfahren zum Bereitstellen eines stickstoffbasierten Wasserstoff-Energiespeichers unter Verwendung eines Gemisches (12), das Kohlenstoffanteile und Siliziumverbindungen, umfasst, wobei:
- zur Synthese von Siliziumnitrid, das vorzugsweise als Zwischenprodukt für das Bereitstellen des stickstoffbasierten Wasserstoff-Energiespeichers dient:
a) ein Reaktionssystem (40) mit einer kontrollierten Prozess-Steuerung (S) bereitgestellt wird,
b) Sauerstoffgas und Stickstoffgas bereitgestellt werden,
c) das Gemisch (12) in eine Brennzone (10) des Reaktionssystems (40) eingebracht und Sauerstoffgas zugeführt wird,
d) die Kohlenstoffanteile des Gemisches (12) kontrolliert in der Brennzone (10) verbrannt werden,
e) die Siliziumverbindungen des Gemisches (12) aufgetrennt werden,
f) Stickstoffgas zugeführt wird, um Silicium aus den Siliziumverbindungen mit Stickstoff in Siliziumnitrid zu überführen, und
g) kohlenstoffdioxidhaltiges Rauchgas, das im Schritt c) und/oder d) entsteht, aufgefangen wird, und
- zur Synthese des stickstoffbasierten Wasserstoff-Energiespeichers das Siliziumnitrid mit einer Wasserstoffquelle in diesen stickstoffbaslerten Wasserstoff-Energiespeicher umgewandelt wird.

2. Verfahren nach Anspruch 1, wobei der stickstoffbasierte Wasserstoffspeicher Ammoniak ist.

3. Verfahren nach Anspruch 1 oder 2, wobei das Umwandeln des Siliziumnitrids in den stickstoffbasierten Wasserstoff-Energiespeicher in Gegenwart einer Lauge durchgeführt wird.

4. Verfahren nach einem der vorhergehenden Ansprüche, wobei zumindest die Schritte c) und f) In voneinander verschiedenen Brennbereichen (10, 20) im Reaktionssystem (40) durchgeführt werden.

5. Verfahren nach einem der Ansprüche 2 bis 4, wobei Ammoniak zum Umwandeln in Ammoniumchlorid in ein modifiziertes Solvay-Verfahren eingeschleust wird, wobei
a) eine konzentrierte Salzsole mit erhöhter Salzkonzentration bereitgestellt wird,
b) Kohlenstoffdioxid bereitgestellt wird,
c) das Ammoniak in die konzentrierte Salzsole eingeleitet wird, um eine ammoniakhaltige Sole zu erhalten,
d) das Kohlenstoffdioxid In die konzentrierte Salzsole und/oder in die ammoniakhaltige Sole eingeleitet wird, und
e) Natriumhydrogencarbonat und/oder Natriumcarbonat aus der ammoniakhaltigen Sole abgetrennt wird.

6. Verfahren nach Anspruch 5, wobei zum Bereitstellen von Kohlenstoffdioxid ein kohlendioxidhaltiges Rauchgas verwendet wird.

7. Verfahren nach Anspruch 6, wobei das Rauchgas aus den Abgasen eines Kraftwerksprozesses eingesetzt wird.

8. Verfahren nach Anspruch 5, wobei zum Bereitstellen von Kohlenstoffdioxid zumindest ein Teil eines kohlenstoffdioxidhaltigen Rauchgases aus dem Verfahren nach Anspruch 1 bereitgestellt wird.

9. Verfahren nach einem der Ansprüche 5 bis 8, wobei die konzentrierte Salzsole aus Meerwasser erzeugt wird.

10. Verfahren nach einem der Ansprüche 5 bis 9, wobei das Ammoniumchlorid umgewandelt wird, so dass es von einem Speicher-Salz aufgenommen wird, wobei,
a) ein Metalloxid bereitgestellt wird, wobei das Metall des Oxids ausgewählt ist aus einer Gruppe von Alkalimetallen, Erdalkallmetallen und Übergangsmetalle
b) das Ammoniumchlorid mit dem Metalloxid zur Reaktion gebracht wird, um Ammoniak und Metallchlorid zu bilden,
c) das Ammoniak von dem Metallchlorid zur Speicherung reversibel aufgenommen wird.

11. Verfahren nach einem der Ansprüche 2 bis 10, wobei das Ammoniumchlorid mit einem Magnesiumoxid zur Reaktion gebracht und als Ammoniak von einem aus der Reaktion hervorgegangenen Magnesiumchlorid reversibel aufgenommen wird.

12. Verfahren nach Anspruch 10, wobei das von einem Metallchlorid reversibel aufgenommene Ammoniak zur Bereitstellung von Wasserstoff verwendet wird.

13. Verfahren nach Anspruch 10, wobei das von einem Metallchlorid reversibel aufgenommene Ammoniak zur Bereitstellung von Energie verwendet wird.
